Europäisches Patentamt

European Patent Office

Office européen des brevets

(19)

(11) Numéro de publication : **0 042 516 B1**

(12)

# FASCICULE DE BREVET EUROPÉEN

(45) Date de publication du fascicule du brevet :
28.11.84

(51) Int. Cl.³ : **F 16 D 65/853**

(21) Numéro de dépôt : **81104291.0**

(22) Date de dépôt : **04.06.81**

(54) **Dispositif de freinage pour rotor de grande inertie.**

(30) Priorité : **12.06.80 FR 8013072**

(43) Date de publication de la demande :
**30.12.81 Bulletin 81/52**

(45) Mention de la délivrance du brevet :
**28.11.84 Bulletin 84/48**

(84) Etats contractants désignés :
**CH DE FR GB IT LI SE**

(56) Documents cités :
**DE-A- 2 758 597**
**DE-B- 1 060 980**
**DE-B- 1 288 377**
**US-A- 4 013 148**

(73) Titulaire : **ALSTHOM-ATLANTIQUE Société anonyme dite:**
**38, Avenue Kléber**
**F-75784 Paris Cédex 16 (FR)**

(72) Inventeur : **Merouge, Gilbert**
**11, rue des Sapins**
**F-90800 Bavilliers (FR)**
Inventeur : **de Vaulx, Joseph**
**5, rue de Madagascar**
**F-90000 Belfort (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

L'invention concerne un dispositif de freinage pour un rotor de grande inertie, ce rotor tournant dans un sens prédéterminé autour d'un axe, ce dispositif comportant :

— une piste de freinage circulaire fixée coaxialement au rotor,

— des vérins fixes disposés en regard de cette piste et susceptibles d'appuyer des garnitures de freinage sur cette piste,

— une succession d'enceintes, chacune représentée par un segment de ladite piste de freinage, et munies chacune d'une entrée et d'une sortie d'eau.

Un tel dispositif est connu, voir par exemple le document US-A-4 013 148. Selon ce document, on injecte de l'eau par un joint rotatif axial dans les enceintes et on l'évacue par le même joint. Les différentes enceintes sont donc alimentées en parallèle par une pompe commune d'injection.

Bien qu'efficace, ce système de refroidissement est compliqué, car il nécessite une pompe et un joint double, qui relie la pompe et un réservoir de décharge non-rotatifs aux entrées et sorties rotatives des enceintes. Un tel joint est souvent le lieu de pertes d'eau, surtout en arrêt du rotor.

L'invention vise à proposer un dispositif de freinage amélioré qui assure un refroidissement par de l'eau sans pompe et sans joints d'eau entre des ensembles rotatifs et des ensembles fixes.

Ce but est atteint selon l'invention par le dispositif tel que spécifié ci-dessus, qui est caractérisé en ce que pour chaque segment, un réservoir d'eau est fixé au rotor et relié à l'entrée et à la sortie de l'enceinte considérée, ce réservoir étant disposé, d'une part, radialement plus près de l'axe du rotor que la piste et, d'autre part, angulairement à l'arrière du segment considéré par rapport au sens de rotation de manière que la force centrifuge et la force de décélération due au freinage tendent à pousser l'eau du réservoir vers l'enceinte et le phénomène de thermosiphon résultant de l'élévation de la température de l'eau dans l'enceinte pendant le freinage tende à établir une circulation de l'eau entre ledit réservoir et l'enceinte associée.

Selon une disposition avantageuse, lorsque l'axe du rotor est vertical, le réservoir est disposé au-dessus du segment pour que le phénomène de thermosiphon puisse résulter non seulement de la présence des forces centrifuges et de décélération, lorsque le rotor tourne encore, mais aussi, même après l'arrêt du rotor, de la présence de la force de la pesanteur.

Selon une autre disposition avantageuse, lorsque le réservoir est relié au segment par des tuyaux, le tuyau de sortie passe sensiblement à l'avant du tuyau d'entrée, par rapport au sens de rotation du rotor, de manière que la diminution de la vitesse angulaire du rotor, lors du freinage, crée une force d'inertie faisant circuler l'eau dans le circuit de refroidissement formé par ces tuyaux.

On connaît par ailleurs, par le document DE-A-1 228 377, un disque de freinage creux contenant une réserve d'eau de refroidissement, et muni de soupapes de sécurité permettant l'évacuation de vapeur en cas de forte surpression. Mais de tels disques creux ne sont pas adaptés au freinage d'un rotor à aussi grande inertie que celui d'un grand alternateur hydraulique, dont la piste de freinage est constituée d'une succession de segments et est capable d'absorber une énergie de freinage dépassant 100 MJ et valant par exemple 750 MJ et au-dessus pour un freinage normal, de 5 400 MJ en freinage d'urgence.

A l'aide des figures schématiques ci-jointes, on va décrire ci-après, à titre non limitatif, comment l'invention peut être mise en œuvre.

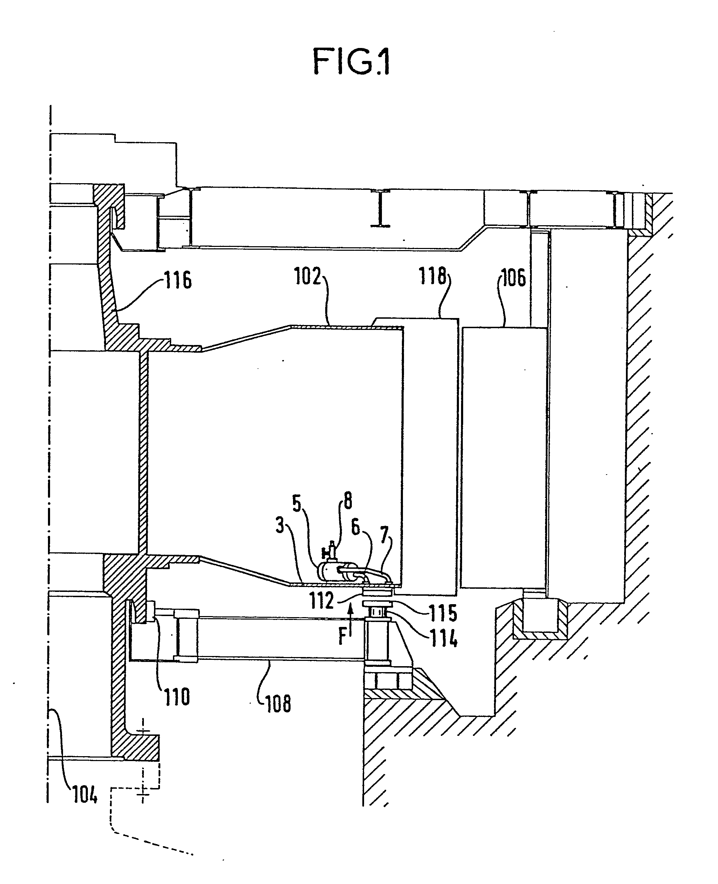

La figure 1 représente une vue schématique d'un alternateur comportant un dispositif de freinage selon l'invention, cet alternateur étant vu en coupe par un plan passant par son axe vertical.

La figure 2 représente un détail de la figure 1 montrant à échelle agrandie une partie de ce dispositif de freinage avec coupe partielle à deux niveaux.

La figure 3 représente une vue du même dispositif selon une flèche verticale F de la figure 1.

L'exemple décrit correspond à une piste segmentée mobile. Cette piste permet le freinage du rotor 102 à axe vertical 104 d'un alternateur dont le stator est représenté en 106. Un croisillon fixe 108 supporte les paliers 110 de ce rotor. Le rotor est entraîné en rotation par une turbine hydraulique non représentée disposée coaxialement sous ce croisillon.

La piste de freinage présente la forme d'une couronne circulaire 112 disposée coaxialement au rotor et fixée à la face inférieure de celui-ci, sur le voile 3 du « croisillon » qui réunit l'arbre 116 aux enroulements 118. Cette piste présente par exemple un diamètre intérieur de 9 500 mm et extérieur de 10 300 mm. Sous cette piste sont disposés un nombre convenable, 24 par exemple, de vérins de freinage 114 à axes verticaux fixés sur le croisillon 108. La tête du piston de chacun de ces vérins porte une garniture de freinage 115 que le vérin vient appliquer contre la piste 112 quand il faut freiner le rotor.

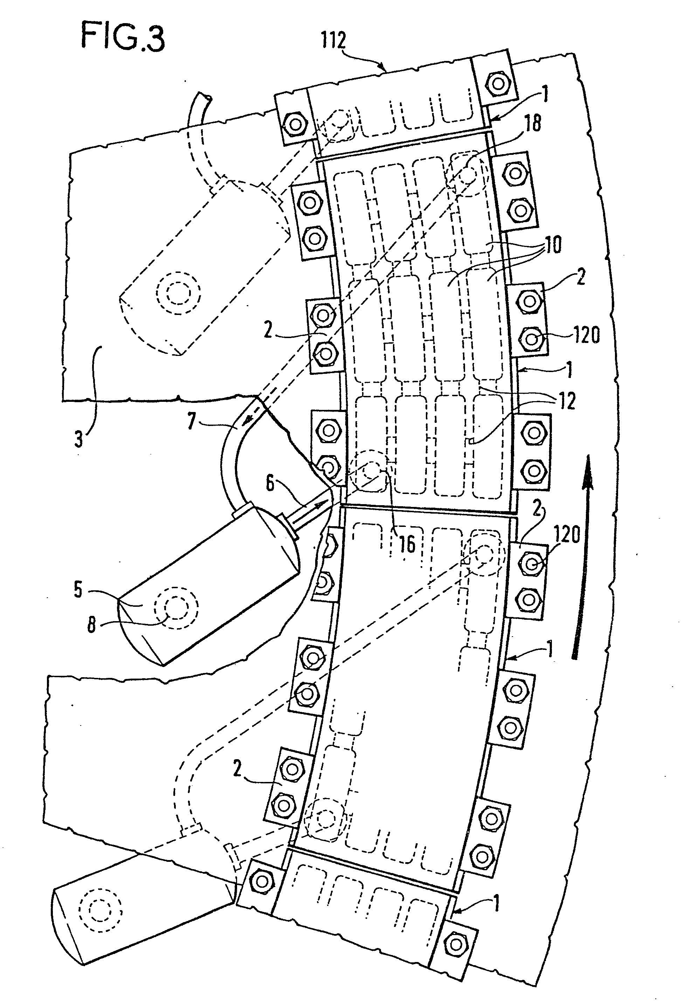

La figure 3 représente des segments 1 de la piste 112. Il faut 30 segments identiques disposés côte à côte sur une même circonférence pour constituer la piste complète. Le segment est en acier moulé et comporte trois alignements radiaux de quatre alvéoles 10 réunies entre elles par des trous 12. Les cloisons séparant ces alvéoles assurent le maintien de la forme du segment malgré son échauffement localisé et elles augmentent la surface d'échange thermique avec l'eau. La face supérieure du segment est fermée par des tôles de fermeture 14 soudées tout autour du segment et sur les cloisons séparant les alvéoles. L'entrée d'eau 16 est située à l'arrière du segment par rapport au sens de rotation et sur le petit diamètre. La sortie d'eau 18 se trouve à l'avant du segment et sur le grand diamètre.

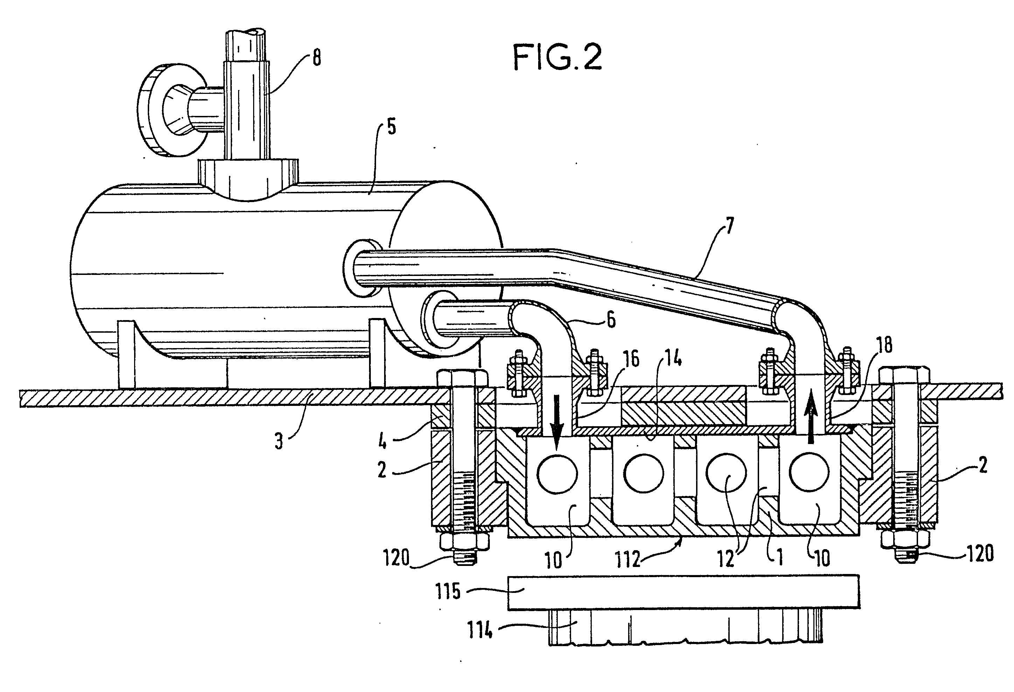

La figure 2 représente l'installation correspondant à chaque segment.

Le segment 1 est maintenu par des taquets 2 fixés à l'aide de boulons 120 sur le voile inférieur du croisillon rotor 3 avec interposition d'un calage 4 permettant de compenser les défauts de planéité de ce voile. Les taquets disposés au milieu de la longueur du segment portent une goupille non représentée pénétrant dans le segment pour fixer rigidement sa position, les autres taquets permettant la dilatation du segment dans le sens tangentiel.

En rotation à la vitesse nominale la surface de l'eau prend la forme d'un paraboloïde. Toute l'eau est chassée vers les grands diamètres. Le segment 1 et le tuyaux 6 et 7 sont entièrement remplis d'eau. Dans le réservoir 5, seul le fond raccordé aux tuyaux 6 et 7 contient encore de l'eau.

Quand on donne l'ordre d'arrêt du groupe, le distributeur de la turbine se ferme et le rotor ralentit. La force d'inertie déforme et déplace la surface de l'eau dans le réservoire, mais dans la mesure où l'orientation de l'axe du réservoir a été choisie non pas rigoureusement radiale, mais en tenant compte de cette composante, le segment et les tuyaux 6 et 7 restent pleins d'eau.

Si, comme représenté, le tuyau 7 passe sensiblement à l'avant du réservoir et du tuyau 6, la force d'inertie provoque une circulation de l'eau dans le circuit formé par ces tuyaux, le réservoir et le segment.

La vitesse du rotor décroît et atteint la vitesse prévue pour l'application des freins mécaniques.

Les garnitures des vérins viennent alors en contact avec la piste qui s'échauffe et échauffe l'eau qu'elle contient. Un thermosiphon s'établit sous l'action de la diminution du poids spécifique de l'eau dans le segment en raison de l'échauffement de cette eau, dont la température est supérieure à celle de l'eau du réservoir. Ce phénomène de thermosiphon accélère la circulation de l'eau qui s'était déjà amorcée. En même temps que la température, la pression monte dans le réservoir. La chaleur produite par le frottement est alors stockée dans la masse des segments et la masse de l'eau. Le rotor est complètement arrêté avant que la température et la pression n'aient atteint les valeurs limites imposées.

Les soupapes 8 sont restées fermées et le système n'a subi aucune perte d'eau. Il faut attendre le temps nécessaire au refroidissement avant d'envisager un nouveau freinage.

En cas de freinage accidentel d'urgence (par exemple avec application des freins lorsque le rotor à une vitesse trop élevée) tout se passe au début comme précédemment, mais le rotor n'est pas arrêté quand la température et la pression atteignent les valeurs limites imposées. Les soupapes 8 s'ouvrent et laissent échapper de la vapeur. Tant que toute l'eau n'est pas transformée en vapeur, la température reste stable, du fait qu'une grande quantité de chaleur est absorbée par la vaporisation de l'eau.

La piste est ainsi capable d'absorber une énergie importante (par exemple trois fois plus qu'en freinage normal) ce qui lui donne une grande marge de sécurité. De l'eau est introduite dans le réservoir après refroidissement pour rétablir le niveau normal.

Il est bien entendu possible d'utiliser un seul réservoir pour un groupe de plusieurs segments successifs raccordés hydrauliquement en série pour que ce groupe constitue un équivalent fonctionnel du segment 1 précédemment décrit.

Les avantages de l'invention sont les suivants :
— une bonne répartition de la température dans l'épaisseur de la piste, ce qui évite des déformations nuisibles,
— une grande capacité calorifique, ce qui autorise le freinage d'un rotor de très grande inertie l'énergie absorbable valant par exemple 750 MJ en freinage normal et 5 400 MJ en freinage d'urgence,
— aucune intervention n'est nécessaire après un freinage normal, car la pression dans le réservoir est restée inférieure au tarage de la soupape, et il n'y a pas eu de perte d'eau,
— la circulation de l'eau est entièrement naturelle et ne nécessite ni pompe, ni organes auxiliaires,
— en cas de freinage accidentel à vitesse trop élevée ou avec un couple moteur résiduel trop important, il n'y a pas de suréchauffement de la piste tant que toute l'eau n'est pas vaporisée, ce qui laisse une grande marge de sécurité (un remplissage en eau de la piste et éventuellement un séchage de la machine sont alors nécessaires).

**Revendications**

1. Dispositif de freinage pour un rotor de grande inertie, ce rotor (102) tournant dans un sens prédéterminé autour d'un axe (104), ce dispositif comportant :
— une piste de freinage circulaire (112) fixée coaxialement au rotor (102),
— des vérins fixes (114) disposés en regard de cette piste et susceptibles d'appuyer des garnitures de freinage (115) sur cette piste,
— une succession d'enceintes, chacune représentée par un segment (1) de ladite piste de freinage (112), et munies chacune d'une entrée (16) et d'une sortie (18) d'eau,
caractérisé en ce que pour chaque segment (1), un réservoir d'eau (5) est fixé au rotor (102) et relié à l'entrée (16) et à la sortie (18) de l'enceinte considérée, ce réservoir étant disposé, d'une part, radialement plus près de l'axe (104) du rotor que la piste (112), et, d'autre part, angulairement à l'arrière du segment (1) considéré par rapport au sens de rotation, de manière que la force centrifuge et la force de décélération due au freinage tendent à pousser l'eau du réservoir (5) vers l'enceinte et le phénomène de thermosiphon résultant de l'élévation de la température de l'eau dans l'enceinte pendant le freinage tende à établir une circulation de l'eau entre ledit réservoir (5) et l'enceinte associée.

2. Dispositif selon la revendication 1, dans lequel l'axe (104) du rotor (102) est vertical, caractérisé par le fait que le réservoir (5) est disposé au-dessus du segment (1).

3. Dispositif selon la revendication 1, dans lequel le réservoir (5) est relié au segment (1) par des tuyaux (6, 7) caractérisé par le fait que le tuyau de sortie (7) passe sensiblement à l'avant du tuyau d'entrée (6), par rapport au sens de rotation du rotor.

4. Dispositif selon la revendication 2, caractérisé par le fait que le réservoir (5) est muni, à sa partie supérieure et à distance des tuyaux d'entrée (6) et de sortie (7), d'une soupape (8) pour permettre l'échappement de la vapeur d'eau au-delà d'une pression prédéterminée.

5. Disposition selon la revendication 1, caractérisé par le fait que le segment (1) comporte des alvéoles internes (10) dont les parois assurent le maintien de la forme du segment (1) tout en augmentant la surface d'échange thermique avec l'eau, ces alvéoles communiquant entre elles.

## Claims

1. A braking device for a high-inertia rotor, this rotor (102) rotating in a predetermined direction around an axis (104), this device comprising :
— a circular braking track (112) coaxially fixed on said rotor (102),
— stationary brake cylinders (114) disposed facing said track and susceptible to push brake linings (115) onto this track,
— a succession of chambers, each represented by a segment (1) of said braking track (112) and each supplied with an inlet (16) and an outlet (18) for water,
characterized in that for each segment (1), a water tank (5) is fixed to the rotor (102) and connected to the inlet (16) and outlet (18) of the considered chamber, this tank being disposed, on the one hand, radially closer to the axis (104) of the rotor than the track (112), and, on the other hand, angularly behind the considered segment (1) with respect to the rotation direction, so that the centrifugal force and the deceleration force due to the braking tend to urge the water of the tank (5) towards the chamber and that the thermosiphonic effect resulting from the rise in temperature of the water in the chamber during braking tends to establish a water circulation between said tank (5) and the associated chamber.

2. A device according to claim 1, in which the axis (104) of the rotor (102) is vertical, characterized in that the tank (5) is disposed above the segment (1).

3. A device according to claim 1, in which the tank (5) is connected to a segment (1) by pipes (6, 7), characterized in that the outlet pipe (7) passes substantially ahead of the inlet pipe (6) with respect to the rotation direction of the rotor.

4. A device according to claim 2, characterized in that the tank (5) is supplied, at its upper part and at some distance from the inlet (6) and outlet pipes (7), with a valve (8) for permitting the water vapour to escape when the pressure rises above a predetermined limit.

5. A device according to claim 1, characterized in that the segment (1) comprises inner cavities (10), the walls of which ensure the rigidity of the segment (1) while increasing the heat exchange surface with the water, these cavities communicating with each other.

## Ansprüche

1. Bremsvorrichtung für einen Rotor (102) mit großer Masseträgheit, der sich in einer vorbestimmten Richtung um eine Achse (104) dreht, wobei diese Vorrichtung aufweist :
— eine ringförmige Bremsspur (112), die koaxial am Rotor (102) befestigt ist,
— feste Zylinderkolben (114), die gegenüber dieser Spur angeordnet sind und Bremsbeläge (115) auf diese Spur drücken können,
— eine Folge von Kammern, von denen jede von einem Segment (1) der Bremsspur (112) gebildet wird und die je mit einem Wassereinlaß (16) und Wasserauslaß (18) versehen sind,
dadurch gekennzeichnet, daß für jedes Segment (1) ein Wasserreservoir (5) am Rotor (102) befestigt und mit dem Einlaß (16) und dem Auslaß (18) der betreffenden Kammer verbunden ist, wobei dieses Reservoir einerseits radial näher an der Achse (104) des Rotors als die Spur (112) und andererseits winkelmäßig hinter dem betrachteten Segment (1) in bezug auf die Rotationsrichtung angeordnet ist, so daß die Zentrifugalkraft und die durch das Bremsen verursachte Verzögerungskraft dazu neigen das Wasser vom Reservoir (5) in die Kammer zu drücken, und daß das Thermosiphonphänomen, das aus der Erhöhung der Wassertemperatur in der Kammer während des Bremsens resultiert, dazu neigt, eine Wasserzirkulation zwischen dem Reservoir (5) und der dazugehörigen Kammer herzustellen.

2. Vorrichtung nach Anspruch 1, in der die Achse (104) des Rotors (102) senkrecht ist, dadurch gekennzeichnet, daß das Reservoir (5) oberhalb des Segments (1) angeordnet ist.

3. Vorrichtung nach Anspruch 1, in der das Reservoir (5) mit dem Segment (1) über Rohre (6, 7) verbunden ist, dadurch gekennzeichnet, daß das Auslaßrohr (7) im wesentlichen vor dem Einlaßrohr (6) in bezug auf die Rotationsrichtung des Rotors verläuft.

4. Vorrichtung nach Anspruch 2, dadurch gekennzeichnet, daß das Reservoir (5) an seinem oberen Teil und entfernt von den Einlaß- (6) und Auslaßrohren (7) ein Ventil (8) aufweist, um das Entweichen von Wasserdampf oberhalb eines vorbestimmten Drucks zu ermöglichen.

5. Vorrichtung nach Anspruch 1, dadurch gekennzeichnet, daß das Segment (1) innere Höhlungen (10) aufweist, deren Wände die Steifigkeit des Segments (1) erhöhen und zugleich die Wärmeaustauschfläche mit dem Wasser vergrößern, wobei diese Höhlungen untereinander verbunden sind.

# FIG.1

FIG.2

FIG.3